# EUROPÄISCHE PATENTANMELDUNG

(11) **EP 0 921 043 A1**
(43) Veröffentlichungstag der Anmeldung: **09.06.1999**
(21) Anmeldenummer: 98120866.3
(22) Anmeldetag: 03.11.1998
(51) Int. Cl.: B60R 21/20, B60R 13/02

(54) **Verkleidungsteil für einen Airbag in einem Kraftfahrzeug**

(30) Priorität: 05.12.1997 DE 19754137
(71) Anmelder: Bayerische Motoren Werke Aktiengesellschaft, 80788 München (DE)
(72) Erfinder: Eckard, Siegemund Dr., 80689 München (DE)

(57) **Zusammenfassung**

Die Erfindung betrifft ein Verkleidungsteil (14) für einen Airbag (16) in einem Kraftfahrzeug, umfassend ein längliches Profilteil aus starrem Kunststoff, das an einem festen Teil des Fahrzeugs, vorzugsweise der A-Säule, befestigbar ist. Um die Verletzungsgefahr der Insassen möglichst gering zu halten, ist vorgesehen, daß das Profilteil in Querrichtung in einen starren Befestigungsbereich (18) und in einen weichen Abdeckbereich (20) unterteilt ist, die beide einstückig miteinander verbunden sind.

## Beschreibung

Die Erfindung betrifft ein Verkleidungsteil für einen Airbag in einem Kraftfahrzeug, umfassend ein längliches Profilteil aus starrem Kunststoff, das an einem festen Teil des Fahrzeugs, vorzugsweise der A-Säule befestigbar ist. Die Erfindung betrifft ferner ein Verfahren zur Herstellung eines solchen Verkleidungsteils.

Wenn ein in einem Kraftfahrzeug angeordneter Airbag bei einem Unfall ausgelöst und aufgeblasen wird, dann muß das zugehörige Verkleidungsteil ausweichen können, um eine Öffnung zu bilden, durch die der Airbag in den Innenraum austreten kann. Ein bekanntes Verkleidungsteil der eingangs genannten Gattung ist mit einer in Längsrichtung verlaufenden Kerbe versehen, die als Scharnier dienen soll. Beim Aufblasen des Airbags kann der eine Bereich des Verkleidungsteils um dieses Scharnier gegenüber dem anderen am Fahrzeug befestigten Bereich verschwenkt werden. Bei diesem bekannten Verkleidungsteil besteht aber die Gefahr, daß beim Aufblasen des Airbags der eine Bereich des Verkleidungsteils nicht wie gewünscht um den anderen Bereich verschwenkt, sondern von diesem abgerissen wird. Im übrigen kann die in dem Verkleidungsteil ausgebildete Kerbe auch nur dann als Scharnier dienen, wenn sie einen geraden Verlauf hat. Diese Voraussetzung ist aber bei einem Verkleidungsteil nicht erfüllt, das sowohl im Querschnitt wie auch im Längsschnitt gekrümmt ist. Dies ist beispielsweise bei einem Verkleidungsteil für die A-Säule eines Kraftfahrzeugs der Fall. Da bei einem Aufklappen des Verkleidungsteils über das Scharnier Kräfte auf den am Fahrzeug befestigten Bereich übertragen werden, muß diese Befestigung verhältnismäßig stabil ausgeführt sein. Montagefreundliche Steckverbindungen müssen daher unter Umständen durch aufwendige Schraubverbindungen ersetzt werden.

Der Erfindung liegt die Aufgabe zugrunde, ein gattungsgemäßes Verkleidungsteil zu schaffen, das unabhängig von seiner Raumform eine einfache Montage zuläßt und beim Auslösen des Airbags keine Verletzungsgefahr für die Insassen bildet.

Erfindungsgemäß wird diese Aufgabe dadurch gelöst, daß das Profilteil in Querrichtung in einen starren Befestigungsbereich und in einen weichen Abdeckbereich unterteilt ist, die beide einstückig miteinander verbunden sind.

Beim Auslösen des Airbags wird der weiche Abdeckbereich des Verkleidungsteils verformt, so daß zwischen seinem freien Rand und dem Fahrzeug ein Spalt entsteht, durch den der Airbag in den Fahrgastraum entweichen kann. Diese Wirkungsweise setzt keine besondere Form des Verkleidungsteils voraus. Die Erfindung ist daher auch bei dem Verkleidungsteil für die A-Säule anwendbar, das sowohl in Quer- als auch in Längsrichtung gewölbt ist. Wegen der Verformbarkeit des weichen Abdeckbereichs des Verkleidungsteils werden auf den starren Befestigungsbereich beim Auslösen des Airbags nur geringe Kräfte ausgeübt. Dies ermöglicht die Befestigung des Verkleidungsteils mit einer montagefreundlichen Steckverbindung, ohne daß die Gefahr einer Ablösung von dem zugeordnetem festen Teil des Fahrzeugs besteht. Da der nach dem Auslösen des Airbags in den Innenraum hineinragende Abdeckbereich des Verkleidungsteils weich ist, besteht auch keine Verletzungsgefahr, falls ein Insasse mit diesem Abdeckbereich in Berührung kommen sollte. Dies ist insbesondere dann von Bedeutung, wenn es sich um das Verkleidungsteil für die A-Säule handelt. Bei bestimmten Fahrzeugtypen ist die A-Säule stark nach hinten geneigt, so daß der Abstand zum Kopf eines Insassen verhältnismäßig gering ist. Bei einem Frontalaufprall besteht daher die Gefahr, daß der Insasse mit dem Kopf gegen den aufgeklappten Abdeckbereich prallt.

Im Hinblick auf eine einfache Montage des Verkleidungsteils ist vorgesehen, daß der Befestigungsbereich mit Verschlußelementen versehen ist, die mit korrespondierenden Verschlußelementen am Fahrzeug federnd in Eingriff bringbar sind.

Der starre Befestigungsbereich und der weiche Abdeckbereich könnten in getrennten Vorgängen hergestellt und zu einem einstückigen Verkleidungsteil verbunden werden. Gemäß der Erfindung ist ein vorteilhafteres Verfahren zur Herstellung eines Verkleidungsteils dadurch gekennzeichnet, daß der Befestigungsbereich und der Abdeckbereich in einem einzigen Gießwerkzeug durch Spritzgießen nacheinander ausgebildet und miteinander verschweißt werden. Die Technik, ein aus unterschiedlichen Kunststoffen bestehendes Bauteil in einem einzigen Gießwerkzeug durch Spritzgießen herzustellen, ist zwar an sich bekannt, wurde aber noch nie bei einem Verkleidungsteil für einen Airbag angewendet.

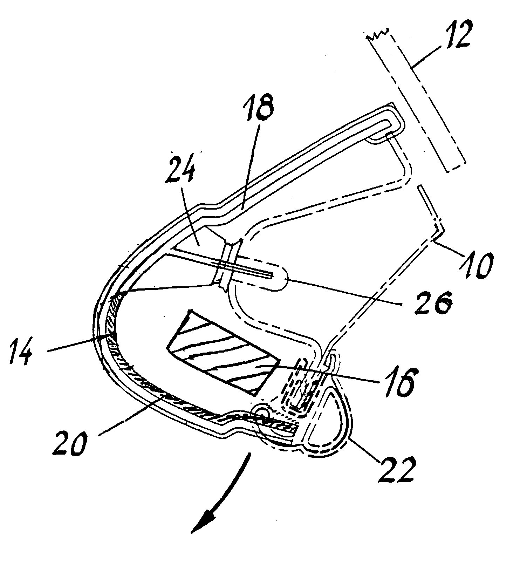

Ein bevorzugtes Ausführungsbeispiel der Erfindung ist in der Zeichnung dargestellt und wird nachfolgend näher erläutert.

Die einzige Figur der Zeichnung zeigt einen Querschnitt durch die rechte A-Säule mit dem zugehörigen Verkleidungsteil.

In der Zeichnung sind die A-Säule 10 und die Windschutzscheibe 12 eines Kraftfahrzeugs mit strichpunktierten Linien dargestellt. Ein Verkleidungsteil 14 ist mit der A-Säule 10 mittels einer Steckverbindung verbunden. In dem von der A-Säule 10 und dem Verkleidungsteil 14 gebildeten Hohlraum ist ein Airbag 16 angeordnet.

Das Verkleidungsteil 14 ist sandwichartig aufgebaut und besteht aus einem inneren tragenden Profilteil, einer mittleren geschäumten Polsterschicht und aus einer äußeren Textilbeschichtung. Das tragende Profilteil umfaßt einen starren Befestigungsbereich 18 und einen weichen Abdeckbereich 20. Die beiden Bereiche 18, 20 sind aus unterschiedlichen Kunststoffen hergestellt und einstückig miteinander verbunden. Die Trennlinie zwischen den beiden Bereichen 18 und 20 verläuft parallel zu den beiden Längsrändern des Profilteils. Das Profilteil ist demnach in Querrichtung in die beiden Bereiche 18 und 20 unterteilt.

Der Befestigungsbereich 18 und der Abdeckbereich 20 können in einem einzigen Gießwerkzeug durch Spritzgießen unmittelbar nacheinander ausgebildet und miteinander verschweißt werden. Bei diesem Vorgang wird ein die Textilbeschichtung bildendes Textilmaterial in dem Gießwertzeug angeordnet und sodann mit zwei unterschiedlichen Kunststoffmaterialien hinterspritzt. Als Material für den steifen Befestigungsbereich 18 ist beispielsweise eine unter der Bezeichnung ABS-PC bekannte Kunststoffmischung oder Polypropylen geeignet. Andererseits ist als Material für die elastische Abdeckschicht 20 eine unter der Bezeichnung EPDM bekannte Kunststoffmischung geeignet. Diese Kunststoffmaterialien gehen beim aufeinanderfolgenden Spritzgießen an der länglichen Trennlinie zwischen den beiden Bereichen 18 und 20 eine innige Verbindung ein.

Am freien Rand des weichen Abdeckbereichs 20 ist eine Türdichtung 22 aus Gummi angebracht. An der Innenseite des starren Befestigungsteils 18 sind Verschlußelemente 24 ausgebildet, die mit an der A-Säule 10 angebrachten korrespondierenden Verschlußelementen 26 federnd in Eingriff bringbar sind.

Der an seinem unteren Ende befestigte Airbag 16 erstreckt sich durch die A-Säule 10 und unter dem Dach bis zu der B-Säule des Fahrzeugs, wo er gleichfalls befestigt ist. Wenn der Airbag 16 bei einem Aufprall des Fahrzeugs ausgelöst wird, dann nimmt einerseits sein Querschnitt zu, während andererseits seine Länge abnimmt. Der Airbag 16 übt daher einen starken Druck auf den Abdeckbereich 20 des Profilteils aus. Unter diesem Druck wird der elastische Abdeckbereich 20 in Richtung des Pfeils verformt, das heißt er wird gegenüber dem steifen Befestigungsbereich 18 im Uhrzeigersinn verschwenkt. Zwischen der Türdichtung 22 und der A-Säule 10 wird daher ein Spalt gebildet, durch den der Airbag 16 in den Innenraum entweichen kann. Dieser Vorgang beginnt am oberen Ende des Verkleidungsteils 14 und setzt sich nach unten und nach hinten fort. Der Kopf des Beifahrers ist daher durch den aufgeblasenen Airbag 16 gegen einen harten Aufprall geschützt. Falls die A-Säule 10 stark nach hinten geneigt ist, besteht zwar die Möglichkeit, daß der Kopf des Beifahrers mit dem in den Innenraum hinein verformten Abdeckbereich 20 des Verkleidungsteils 14 in Berührung kommt. Da dieser Abdeckbereich aus einem weichen Material besteht, kann dies jedoch nicht zu ernsthaften Verletzungen führen.

Wenngleich das vorstehend beschriebene Verkleidungsteil zur Verkleidung der A-Säule dient, so ist erkennbar, daß dieses in gleich vorteilhafter Weise auch an anderen Orten eines Kraftfahrzeugs, beispielsweise an der Tür eingesetzt werden kann.

### Bezugszeichenliste:

- 10: A-Säule
- 12: Windschutzscheibe
- 14: Verkleidungsteil
- 16: Airbag
- 18: Befestigungsbereich
- 20: Abdeckbereich
- 22: Türdichtung
- 24: Verschlußelemente an. 18
- 26: Verschlußelemente an 10

## Patentansprüche

1. Verkleidungsteil für einen Airbag in einem Kraftfahrzeug, umfassend ein längliches Profilteil aus starrem Kunststoff, das an einem festen Teil des Fahrzeugs, vorzugsweise der A-Säule befestigbar ist, dadurch **gekennzeichnet**, daß das Profilteil in Querrichtung in einen starren Befestigungsbereich (18) und in einen weichen Abdeckbereich (20) unterteilt ist, die beide einstückig miteinander verbunden sind.

2. Verkleidungsteil nach Anspruch 1, dadurch **gekennzeichnet**, daß der Befestigungsbereich (18) mit Verschlußelementen (24) versehen ist, die mit korrespondierenden Verschlußelementen (26) am Fahrzeug federnd in Eingriff bringbar sind.

3. Verfahren zur Herstellung eines Verkleidungsteils nach Anspruch 1 oder 2, dadurch **gekennzeichnet**, daß der Befestigungsbereich und der Abdeckbereich in einem einzigen Gießwerkzeug durch Spritzgießen nacheinander ausgebildet und miteinander verschweißt werden.
